# FASCICULE DE BREVET EUROPEEN

(11) **EP 3 451 110 B1**
(45) Date de publication et mention de la délivrance du brevet: **31.07.2024**
(21) Numéro de dépôt: 18191596.8
(22) Date de dépôt: 30.08.2018
(51) Int. Cl.: G05D 23/19

(54) **PROCÉDÉ ET DISPOSITIF DE GESTION DE LA TEMPÉRATURE D'UN MODULE D'UNE LIGNE DE PRODUCTION**
VERFAHREN UND VORRICHTUNG ZUR STEUERUNG DER TEMPERATUR EINES MODULS EINER PRODUKTIONSLINIE
METHOD AND DEVICE FOR MANAGING THE TEMPERATURE OF A MODULE OF A PRODUCTION LINE

(30) Priorité: 30.08.2017 FR 1757975
(43) Date de publication de la demande: 06.03.2019
(73) Titulaire: SIDEL PARTICIPATIONS, 76930 Octeville-sur-Mer (FR)
(72) Inventeur: CHOPLIN, Gregory, 21910 CORCELLES LES CÎTEAUX (FR); KLOTZ, Franck, LAVAL, QUEBEC H7W4V3 (CA); KUNTZ, Jean-Yves, 67116 REICHSTETT (FR)
(74) Mandataire: Sidel Group

(56) Documents cités:
- EP-A1- 2 688 180
- EP-A1- 2 793 353

## Description

La présente invention entre dans le domaine de l'optimisation de la consommation d'énergie au sein d'une ligne de production et/ou de conditionnement de produits.

Au sens de la présente invention, on englobe dans le terme « production » l'ensemble « production et/ou conditionnement de produits ».

Une telle ligne de production comporte au moins un module principal pourvu des moyens thermiques dédiés à la production desdits produits. L'invention vise alors l'amélioration de la dépense énergétique d'un tel module principal.

A titre d'exemple explicatif préférentiel, mais non limitatif, lesdits produits peuvent consister en des contenants, tels des flacons, bouteilles, bidons, etc. De tels produits subissent une première phase dite de production au cours de laquelle ils sont finalisés à l'unité au travers d'une succession de plusieurs étapes au sein de modules correspondants, comme le remplissage, le bouchage et l'étiquetage.

De tels produits prêts à l'usage subissent alors une deuxième étape de conditionnement en lots, chaque lot étant constitué par regroupement, en quinconce ou non, de plusieurs produits selon une disposition en matrice, généralement parallélépipédique carrée ou rectangle. Les produits sont maintenus ensemble en lot par un enrobage constitué d'un film plastique. Cet enrobage est appliqué au travers d'une étape de fardelage, au moyen d'un module dédié de type fardeleuse. De façon complémentaire, chaque lot peut être maintenu inférieurement au moyen d'un support formant un fond, par exemple une barquette cartonnée, positionnée généralement avant enrobage et fardelage. A la sortie de cette deuxième étape de conditionnement, les produits se présentent donc en lot au sein duquel ils sont maintenus sous forme de fardeaux ; par exemple, de tels fardeaux peuvent ensuite être disposés sur une palette en vue de leur manutention et leur transport.

A cet effet, l'invention trouvera une application préférentielle, mais aucunement limitative, au sein d'une ligne de production comportant au moins un module principal de conditionnement de type fardeleuse.

Communément, une telle fardeleuse comporte un poste d'enrobage des produits en lot au moyen d'un film plastique. Un tel film plastique est prévu thermorétractable. Ladite fardeleuse comporte en aval un poste de chauffage, constitué d'au moins un four, constitué généralement de plusieurs zones de chauffe, traversé par chaque lot de produits enrobés, permettant audit film de se rétracter et d'épouser la forme extérieure du lot de produits, les maintenant ensemble. Le lot ainsi enrobé et enserré par ledit film rétracté est refroidi en sortie du four, afin de conférer une résistance mécanique suffisante au lot ainsi maintenu enrobé en vue de sa manutention et de son transport.

De manière générale, au sens de la présente invention, la fardeleuse utilisée pour le conditionnement des produits en lot permet de fonctionner à une cadence élevée, c'est-à-dire automatisée, ne requérant pas d'intervention d'un opérateur pour le traitement des produits en fonctionnement normal.

Dès lors, un tel module principal de fardeleuse voit ses moyens thermiques constitués au moins par un four, constitué d'une à plusieurs zones de chauffe.

Depuis quelques années, pour des raisons tant économiques qu'environnementales, un objectif constant vise à limiter la consommation énergétique au sein des lignes de production. Dès lors, une attention toute particulière est portée sur les moyens thermiques du module principal, consommant le plus d'énergie.

Dans le cadre de l'exemple explicatif, un effort plus particulier est fourni au regard de la consommation du module de fardeleuse, dans la mesure où son four est généralement l'un des éléments les plus énergivores d'une ligne de production. Cet effort porte plus précisément sur la mise en place d'une gestion permettant de réduire la consommation d'énergie lorsque la fardeleuse ne fonctionne pas, c'est-à-dire qu'elle ne peut pas produire, notamment en raison d'un arrêt imprévisible survenu le long de la ligne, par exemple en raison d'une panne d'un autre module situé en amont ou en aval sur ladite ligne, ou bien en cas de coincement ou de chute d'un produit ou d'un lot de produits, ou encore à cause d'un dysfonctionnement au niveau dudit module de fardeleuse. Un autre arrêt peut être prévisible, planifié à l'avance comme un changement de format des produits à traiter ou une opération de maintenance, entraînant l'arrêt de toute ou partie de la ligne de production, dont le module principal de fardeleuse. Concrètement, un tel événement peut se traduire par l'arrêt du cheminement des produits le long de la ligne de production, entraînant une mise en attente du module de fardeleuse, qui n'est plus approvisionné en produits, ou bien qui ne peut plus alimenter en aval la ligne de production. Cette attente s'étale sur une durée variable correspondant au temps nécessaire pour solutionner la cause dudit arrêt et relancer le cheminement des produits. Pendant le temps de cet arrêt, le four est généralement maintenu à température de production, consommant inutilement de l'énergie, alors qu'aucun produit ne le traverse.

De surcroît, la fardeleuse comprend en sortie un poste de refroidissement des produits qui reste actif en cas d'arrêt alors qu'aucun produit ne le traverse. Il en va de même pour les autres postes constituant ce module de fardeleuse, comme par exemple les moyens de refroidissement de la portion de retour du convoyeur.

Plusieurs solutions ont été imaginées en vue de limiter la consommation énergétique lorsque survient un arrêt le long d'une ligne de production. A titre d'exemple, le document WO 2011/144231 propose la mise en place de moyens de fermetures aux niveaux de l'entrée et de la sortie du four de la fardeleuse. Ces moyens sont actionnés en fermeture lorsque la fardeleuse n'est pas en phase de production, dans le but de limiter les déperditions de chaleur vers l'extérieur du four via ces ouvertures ainsi obturées. Toutefois, l'influence de ce type de fermetures reste faible sur la consommation énergétique, dans la mesure où une grande quantité de chaleur se dissipe par le dessous, au travers du convoyeur qui transporte les produits au travers du four.

Une autre solution précaire consiste, en cas d'arrêt, à baisser manuellement la température du four pendant l'arrêt de la production jusqu'à une température de consigne. Une fois les causes de l'arrêt résolues, le chauffage du four est relancé. Toutefois, en fonction de l'arrêt survenu et de sa durée pour le résoudre, mais aussi en fonction de la baisse de température liée à cette durée ou à la température de consigne choisie, la remise en route dudit four, effectuée aussi manuellement, peut prendre un laps de temps conséquent jusqu'à ce qu'il atteigne la température optimale requise pour le fardelage. En outre, ce laps de temps varie en fonction de chaque four mais aussi de son ancienneté. Cette technique empirique entraîne généralement une augmentation de la durée d'arrêt, le temps que le four revienne à sa température requise, alors que le reste de la ligne est déjà redevenu opérationnel. En effet, la remise en route du four intervient généralement une fois qu'on est certain d'avoir solutionné le problème et qu'on a relancé la production. Ainsi, cette solution n'est que rarement envisagée, augmentant encore davantage la perte de temps sur la ligne.

Une autre solution, décrite dans le document EP 2 793 353 A1 consiste encore à planifier des arrêts prévisibles de production, afin de pouvoir optimiser la consommation d'énergie d'une installation lors d'arrêts prévus. Le document EP 2 688 180 A1, quant à lui, propose de cesser d'alimenter des modules situés en aval d'une installation de production, tant qu'ils ne sont pas en cours de traitement. Ces deux solutions ne permettent pas d'optimiser la consommation d'énergie d'une installation de production, en particulier dans le cas d'arrêts imprévus, tout en permettant un retour rapide à la normale, sans perte de productivité.

Il demeure donc un réel besoin d'améliorer l'existant en vue d'économiser significativement l'énergie consommée par les moyens thermiques dans les moments d'inutilisation d'un module principal, comme une fardeleuse, en cas d'arrêt survenant le long de la ligne de production. En particulier, la solution ne doit aucunement impacter le fonctionnement de la ligne, c'est-à-dire que la fardeleuse doit être en conditions optimales d'utilisation dès que la production reprend normalement, en particulier lorsque le cheminement des produits reprend de façon normale le long de la ligne, assurant à nouveau l'approvisionnement dudit module de fardeleuse et que cette dernière peut approvisionner en aval la ligne de production.

Dans cette optique, l'invention envisage d'intégrer un système d'apprentissage automatique permettant de mémoriser au moins des données passées, en vue d'assurer un rendement optimal de la ligne de production, tout en économisant de l'énergie. Plus précisément, en cas d'arrêt de la production au sein de ladite ligne, l'invention prévoit de façon automatique de diminuer puis augmenter la température des moyens thermiques du module principal, par exemple le four d'un module de fardeleuse. Plus avant, lorsqu'un arrêt survient, l'invention détermine jusqu'à quelle température il est possible d'abaisser les moyens thermiques, sur la base desdites données passées recueillies quand est survenu un événement, en particulier lors d'événement passé similaire qui se reproduit.

Avantageusement, l'invention prend en compte la hausse connue en température des moyens thermiques, à savoir du four et de sa ou ses zones de chauffe, pour connaître la durée d'élévation en température nécessaire audit four pour atteindre la température optimale de fonctionnement, dite « température de consigne ». A partir de cette durée d'élévation, l'invention détermine avec exactitude quand et/ou à quelle valeur inférieure de température, le chauffage des moyens thermiques doit être relancé.

Dans le cas d'un arrêt prévu, étant donné qu'on connaît la durée, il est possible de déterminer la température minimale jusqu'à laquelle abaisser la température des moyens thermiques, éventuellement pendant combien de temps la maintenir à ce seuil, jusqu'à commander de nouveau l'augmentation de température sur la plage temporelle restante, qui correspond alors au temps nécessaire pour passer de ladite température minimale jusqu'à la température de consigne.

Dans le cas d'un arrêt imprévu, ne connaissant pas la durée nécessaire à la résolution dudit arrêt, l'invention prévoit d'extrapoler une durée d'arrêt et/ou une valeur de température minimale par rapport à des données passées, enregistrées auparavant concernant un événement passé similaire. L'invention agit alors de la même façon, diminuant la température de fonctionnement des moyens thermiques jusqu'à une température minimale, éventuellement la maintenir à ce seuil, jusqu'au moment où il est nécessaire d'augmenter de nouveau la température pour atteindre la température de consigne au terme d'un délai théorique comparatif.

Ainsi, l'invention permet d'anticiper le retour à la production, tout en économisant de l'énergie, pour des arrêts de courte ou longue durée.

En outre, l'invention enregistrant des données au fil du temps, la gestion s'adapte au fonctionnement propre de chaque ligne de production. En outre, l'invention enregistrant des données au fil du temps, la gestion apporte une amélioration de la précision de prédiction de la durée d'élévation de la température et de l'adaptation. La prédiction peut se faire en temps réel et de manière individualisée pour chaque module principal de chaque ligne de production. En effet, l'invention permet que les propriétés et performances intrinsèques au module principal et aussi à la ligne de production soient prises en compte dans l'adaptation de la température pour atteindre la température de consigne. Ceci permet par exemple de prendre en compte le vieillissement du module principal, et/ou un quelconque défaut de fabrication particulier au module principal. L'invention permet donc un apprentissage non seulement autonome mais aussi individualisé, et en définitive une amélioration de l'économie d'énergie tout en impactant aucunement le fonctionnement de la ligne de production.

De ce fait, au fur et à mesure de sa mise en oeuvre, l'invention affine automatiquement ses données, optimisant la gestion énergétique de ladite ligne de production.

A cet effet, l'invention concerne un procédé de gestion d'un module principal d'une ligne de production, ladite ligne comportant au moins un module situé en amont ou en aval dudit module principal, ledit module principal étant équipé de moyens thermiques fonctionnant en production à une température de consigne, procédé dans lequel :
- en cours de production, lorsque survient un arrêt de la continuité de production au niveau dudit module principal sur une période, on abaisse la température desdits moyens thermiques ;
- puis on rétablit la température desdits moyens thermiques jusqu'à atteindre ladite température de consigne.

Un tel procédé de gestion se caractérise en ce que :
- on enregistre des données comprenant au moins des données passées, lesdites données passées concernant au moins un événement passé et comprenant au moins une durée d'élévation de la température desdits moyens thermiques depuis une première température jusqu'à une deuxième température ;
- on adapte automatiquement, en fonction desdites données, la température desdits moyens thermiques jusqu'à atteindre ladite température de consigne, au plus tard quand la continuité de production reprend au niveau dudit module principal.

On notera que les événements passés peuvent être catégorisés, par rapport au module où ils surviennent, leurs causes probables ou encore toute caractéristique les définissant. Selon d'autres caractéristiques additionnelles, non limitatives du procédé, l'événement passé est un événement passé survenu en cours de production. Un événement peut être enregistré, par l'invention, en produisant des données représentatives de l'événement. Les données représentatives de l'événement peuvent avoir une structure de données qui comprend un type d'événement indicatif de l'événement, et/ou un ou plusieurs paramètres indicatifs de l'événement. Un type d'événement peut être indicatif d'un arrêt (par exemple un arrêt planifié (ou prévu) et/ou un arrêt imprévu), indicatif d'un problème du module, indicatif de maintenance, indicatif de réapprovisionnement, indicatif d'un événement périodique, indicatif d'une ligne de production, indicatif d'une interruption au niveau d'un autre module amont et/ou aval, et/ou indicatif du produit (ou type de produit) en production. Un paramètre indicatif de l'événement peut comprendre une durée de l'événement, une température indiquée de l'événement, une périodicité de l'événement, et/ou une fréquence de l'événement. Selon d'autres caractéristiques additionnelles, non limitatives du procédé, lesdites données passées peuvent comprendre :
- une durée antérieure durant laquelle on a abaissé puis on a rétabli la température desdits moyens thermiques ;
- une durée de résolution durant laquelle on a résolu un problème spécifique survenu au niveau dudit module principal, dudit module amont et/ou aval ;
   et/ou
- une durée de reprise de la production entre ledit module principal, un module amont et/ou aval.

Selon d'autres caractéristiques additionnelles, non limitatives du procédé, lesdites données peuvent avoir une structure de données qui comprend un indicateur de catégorie de données, et/ou un indicateur de type de données. L'indicateur de catégorie de données peut caractériser la cause d'un arrêt, comme l'organe, la zone ou le poste en cause, ainsi que les valeurs des durées relatives au temps nécessaire à la réparation ou à l'entretien, pour chaque organe, zone ou poste en question. Selon d'autres caractéristiques additionnelles, non limitatives du procédé, lesdites données peuvent être indexées en fonction de leur catégorie indiquée par un indicateur de catégorie de données. Selon d'autres caractéristiques additionnelles, non limitatives du procédé, lesdites données peuvent être indexées en fonction de l'indicateur de type de données. Selon d'autres caractéristiques additionnelles, non limitatives du procédé, lesdites données peuvent avoir une structure de données qui comprend un identifiant du module concerné. Selon d'autres caractéristiques additionnelles, non limitatives du procédé, lesdites données peuvent être indexées selon l'identifiant du module concerné.

Additionnellement, on peut enregistrer en sus au sein desdites données, des données connues, lesdites données connues étant relatives à une consigne et comprenant :
- une durée planifiée d'arrêt de la circulation des produits le long de ladite ligne de production ;
   et/ou
- une durée estimée et saisie par un opérateur.

On peut aussi enregistrer plusieurs valeurs d'une même catégorie de données passées et on applique la valeur la plus défavorable pour adapter automatiquement la température desdits moyens thermiques.

Selon d'autres caractéristiques additionnelles, non limitatives du procédé, lesdites données peuvent avoir une structure de données qui comprend un paramètre de temps (par exemple un horodatage des données au moment de l'enregistrement des données). Selon d'autres caractéristiques additionnelles, non limitatives du procédé, lesdites données peuvent être indexées en fonction de leur horodatage.

On peut en outre remplacer la valeur la plus ancienne d'une même catégorie de données passées par une valeur nouvellement enregistrée. Le remplacement d'une valeur plus ancienne par une valeur plus récente peut se faire en utilisant l'horodatage compris dans les données au moment de l'enregistrement.

Lesdits moyens thermiques du module principal peuvent comporter des moyens connexes, et on peut modifier le fonctionnement desdits moyens connexes en fonction desdites données sur ladite période dudit arrêt.

L'invention permet ainsi d'obtenir un aspect prédictif lorsqu'un arrêt survient sur une ligne de production, diminuant automatiquement la température des moyens thermiques du module principal par rapport à la température de consigne, pendant une durée spécifique, en fonction dudit arrêt, tout en assurant la reprise normale de la production dès que les causes de l'arrêt sont résolues, sans délai d'attente. En effet, le retour à la température optimale de fonctionnement des moyens thermiques est anticipée, de sorte qu'au moment de la reprise de la production le long de la ligne (au plus tard quand les produits se présentent et circulent de nouveau au niveau des moyens thermiques du module principal), lesdits moyens thermiques sont déjà revenus à ladite température de consigne requise pour l'opération que le module principal doit traiter. La précision de l'aspect prédictif peut ainsi être amélioré par l'invention. L'aspect prédictif peut se faire en temps réel et de manière individualisée pour chaque module principal de chaque ligne de production.

L'invention concerne aussi un dispositif de gestion d'au moins un module principal au sein d'une ligne de production. Le module principal d'un tel dispositif de gestion comprend des moyens thermiques et des moyens de contrôle d'au moins la température desdits moyens thermiques.

Un tel dispositif est caractérisé en ce qu'il comprend des moyens de gestion pourvus :
- de moyens d'enregistrement de données dont au moins des données passées, lesdites données passées comprenant au moins une durée d'élévation de la température desdits moyens thermiques depuis une première température jusqu'à une deuxième température ;
- de moyens de commande automatique desdits moyens de contrôle appliquant au moins une hausse de ladite température des moyens thermiques en fonction desdites données.

Selon d'autres caractéristiques additionnelles, non limitatives, lesdits moyens d'enregistrement d'un tel dispositif peuvent comprendre des moyens de sélection des valeurs pour chacune desdites données passées. Selon d'autres caractéristiques additionnelles, non limitatives, lesdits moyens de sélection peuvent sélectionner des valeurs pour chacune desdites données passées en fonction de l'événement survenu, et/ou en fonction de l'horodatage des données.

Ledit dispositif de gestion peut comporter des moyens de détection d'un arrêt survenant au niveau dudit module principal et/ou d'une interruption au niveau dudit module amont et/ou aval.

En outre, un tel dispositif de gestion peut être aisément intégré sur toute ligne de production, s'adaptant à chaque module principal, en particulier au module de fardeleuse, ainsi qu'aux autres modules amont et/ou aval équipés de moyens thermiques de type chauffage, en vue d'optimiser la consommation énergétique de l'intégralité de la ligne de production.

L'invention permet donc d'anticiper le retour à la normale de la production, en contrôlant automatiquement la durée sur laquelle la température des moyens thermiques dudit module principal, notamment du four du module de fardeleuse, est modifiée, ainsi qu'éventuellement en contrôlant d'autres éléments de la ligne de production, et jusqu'à des valeurs automatiquement calculées, optimisant au maximum l'économie d'énergie en fonction des antécédents de la ligne de production.

A ce titre, l'invention enregistrant des données concernant des événements survenus antérieurement, plus la ligne de production est gérée au fil du temps par l'invention, plus les prédictions deviennent précises et la consommation en énergie réduite. L'invention présente alors un caractère d'apprentissage automatique, prévu en grande partie autonome.

En particulier, l'invention effectue une sélection parmi les données enregistrées lors d'un arrêt et celles enregistrées auparavant, s'assurant de maintenir à jour les valeurs des différents types de données, remplaçant les données obsolètes ou trop anciennes.

De plus, l'invention envisage de pouvoir prendre en considération les données enregistrées les plus défavorables, s'assurant ainsi que, dans le pire des cas, les actions de gestion de l'invention sur la ligne de production, ne nuisent en aucune manière à son fonctionnement, en particulier au retour à la température de consigne des moyens thermiques du module principal.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement et partiellement un exemple de ligne de production équipée du dispositif de gestion selon l'invention, montrant en partie inférieure un module principal de type fardeleuse, dont les moyens thermiques consistent en un four constitué de deux zones de chauffe, en un module de refroidissement et en des moyens de refroidissement du convoyeur, la figure montrant encore une circulation de produits le long de ladite ligne au travers de plusieurs autres modules situés en amont, jusqu'à ce module de fardeleuse ;
- les figures 2 à 4 représentent schématiquement trois exemples d'évolution de la valeur de la température selon l'axe des ordonnées en fonction du temps selon l'axe des abscisses, montrant trois différentes possibilités parmi d'autres de gestion selon l'invention ;
- la figure 5 représente schématiquement un exemple de dispositif de gestion selon l'invention ;
- la figure 6 représente schématiquement un exemple de méthode ou procédé de gestion de la température d'un module d'une ligne de production selon l'invention.

La présente invention concerne la gestion d'un module principal 1 d'une ligne de production de produits 2, en vue de diminuer sa consommation énergétique.

Une telle ligne de production comporte au moins un module 3 situé en amont ou en aval dudit module principal 1, de préférence plusieurs modules en amont et/ou aval 3. Différentes opérations sont menées successivement au travers de chaque module. Des moyens de convoyage 4 assurent le transport des produits depuis et vers lesdits modules amont et/ou aval 3, ainsi que ledit module principal 1.

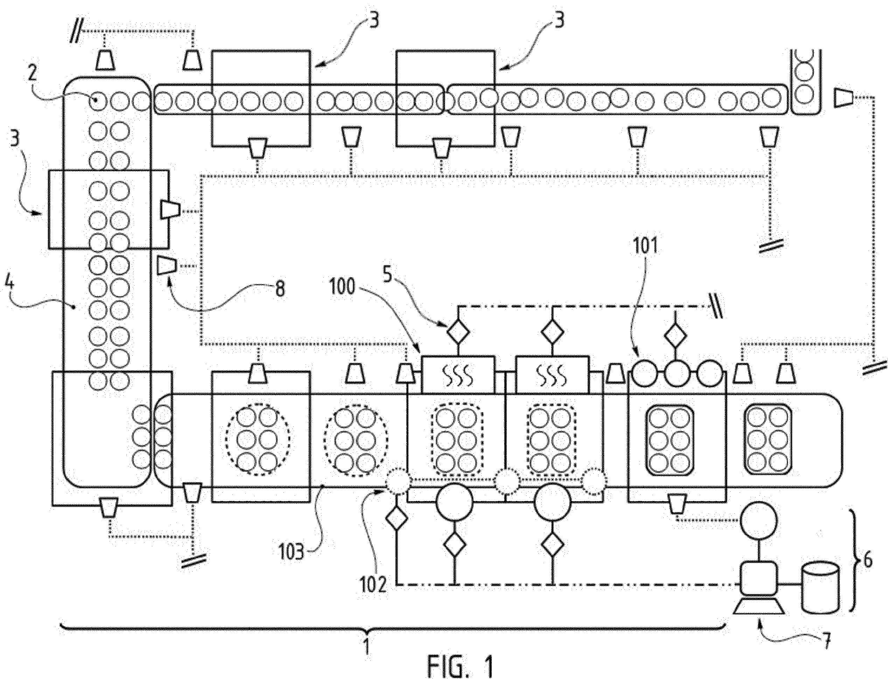

En référence à l'exemple non limitatif représenté sur la figure 1, ledit module principal 1 se situe en bout de la ligne de production, tandis que trois modules 3 se situent en amont.

Ledit module principal 1 est équipé de moyens thermiques fonctionnant en production à une température de consigne 1000. Dans l'exemple de réalisation préférentiel, ledit module principal 1 est de type fardeleuse et ses moyens thermiques sont constitués d'au moins un four 100, notamment constitué de deux zones de chauffe.

De façon subsidiaire, les moyens thermiques peuvent aussi comprendre des moyens connexes, comme des moyens de refroidissement 101 des produits 2 en sortie dudit four 100 ou bien des moyens de régulation 102 de la température d'au moins un convoyeur 103 propre audit module principal 1, en particulier un convoyeur 103 propre aux moyens thermiques.

Dans ce cadre, l'invention prévoit qu'en cours de production, lorsque la production se déroule en continuité avec tous les modules en fonctionnement et que lesdits produits 2 circulent normalement au travers de chacun desdits modules, si un arrêt survient et empêche ladite continuité de la production, à savoir que le cheminement des produits 2 est interrompu, au niveau dudit module principal 1, on intervient sur la température des moyens thermiques dudit module principal 1, afin de limiter les pertes énergétiques.

Plus précisément, l'arrêt survient au niveau dudit module principal 1 et peut être induit suite à une interruption survenue au niveau d'un autre module amont et/ou aval 3. De façon générique, sauf spécifié autrement, le terme « arrêt » englobe un arrêt au niveau du module principal 1 et une interruption au niveau d'un module amont et/ou aval 3.

Dès lors, si un arrêt survient, alors on abaisse la température desdits moyens thermiques. Cette baisse peut correspondre à stopper le chauffage des moyens thermiques ou bien en la diminution selon ou jusqu'à une valeur déterminée, par exemple en agissant sur le thermostat de chaque four 100, voire sur les thermostats des zones de chauffe de chaque four 100.

Ensuite, on rétablit la température desdits moyens thermiques jusqu'à atteindre ladite température de consigne 1000. On notera que l'arrêt entraîne une altération de la continuité de la production sur une période. Dès lors, le rétablissement peut intervenir au cours de cette période temporelle, notamment de sorte qu'au plus tard quand la continuité de production reprend au niveau dudit module principal 1, la température de ses moyens thermiques a atteint la température de consigne 1000 nécessaire au bon traitement des produits 2. En d'autres termes, les moyens thermiques du module principal 1 doivent impérativement être opérationnels au moment où les produits 2 arrivent de nouveau à la cadence habituelle de production de ladite ligne et/ou sortent dudit module principal 1, approvisionnant l'aval de la ligne de production.

En outre, la période sur laquelle s'étale l'arrêt peut correspondre au temps nécessaire à la détection d'un problème et de sa cause, à l'intervention et à la résolution, jusqu'au retour en continuité de production. Ladite période peut alors être inconnue, si l'arrêt survient pour la première fois, ou connue de façon précise ou estimée, si un événement passé réciproquement similaire ou identique a déjà eu lieu. Cette période peut être aussi connue, dans le cas d'un arrêt envisagé de la production.

Ainsi, la période de l'arrêt se décompose en un premier laps de temps durant lequel la température des moyens thermiques est descendue, puis éventuellement maintenue à une valeur de seuil minimum 1001 pendant une durée, et en un second laps de temps durant lequel ladite température est augmentée jusqu'à retourner à la valeur de la température de consigne 1000, éventuellement à la fin de ladite durée du seuil minimum 1001. On notera que cette hausse de température peut s'effectuer continuellement ou bien de façon discontinue, à savoir qu'un palier 1002 à une température donnée est effectué pendant un laps de temps entre deux hausses successives.

Dans ce contexte, l'invention consiste en ce qu'on enregistre des données, notamment des données passées concernant au moins un événement passé, de préférence plusieurs événements passés. Dès lors, lorsque survient un arrêt, nouveau, similaire ou identique, sur la ligne de production, au niveau de l'un et/ou l'autre desdits modules, on connaît déjà des données passées préalablement enregistrées, qui peuvent être appliquées et/ou comparées avec des données mesurées, alors non connues ou non enregistrées, relatives à l'arrêt qui survient et altère la production.

En rapport avec l'événement passé dont certains aspects ont été mémorisés, lesdites données passées enregistrées comprennent au moins une durée. Cette dernière peut correspondre à toute ou partie de la période dudit événement passé.

De préférence, en l'absence de données passées enregistrées lors d'événement passé, on enregistre au sein desdites données passées au moins une durée d'élévation de la température desdits moyens thermiques lors de leur mise en route au moment du lancement de ladite production. Cette durée d'élévation est enregistrée entre une première et une seconde température. En d'autres termes, on enregistre le temps nécessaire aux moyens thermiques pour passer d'une température inférieure à une température supérieure, de préférence pour atteindre leur température de consigne 1000. Si l'invention a uniquement enregistré des données passées relatives à la mise en route des moyens thermiques, ce sont ces données passées qui sont prises en compte pour le prochain arrêt qui survient et altère la continuité de la production.

Lors de la première mise en service, ainsi que d'autres mises en fonctionnement ultérieures des moyens thermiques, peuvent être prises en compte les caractéristiques techniques dispensées par le constructeur. Ces caractéristiques techniques peuvent être combinées avec ou remplacées par les données nouvellement enregistrées.

En outre, ladite durée d'élévation peut aussi être enregistrée, en vue d'être prise en compte ultérieurement, à n'importe quel autre moment, notamment lors d'un arrêt, suite à ladite baisse commandée et lors de la hausse contrôlée qui s'en suit.

On notera que l'enregistrement de ladite durée peut s'effectuer par intervalles réguliers ou irréguliers de températures, les bornes inférieures et supérieures de tels intervalles étant respectivement la première et la deuxième température. De tels intervalles représentent donc un délai entre un delta de deux températures, ladite première et ladite deuxième températures.

Plus avant, ladite durée d'élévation permet de déterminer une courbe croissante, lissée ou non, sous forme de segments de droites correspondant auxdits intervalles, modélisant la température des moyens thermiques en fonction du temps. En particulier, il est possible de déterminer les coefficients directeurs de chacun des segments de droites, d'effectuer des extrapolations linéaires entre deux instants ou deux valeurs de températures, ou encore de calculer des courbes moyennes entre deux points.

Ainsi, à partir de n'importe quelle valeur de température des moyens thermiques, on connaît le temps nécessaire pour atteindre la valeur de la température de consigne 1000.

A ce titre, l'invention prévoit de mesurer la température desdits moyens thermiques. Ces mesures peuvent être opérées en continu ou à intervalles réguliers ou irréguliers. Ainsi, outre connaître la température des moyens thermiques, il est possible de déterminer le laps de temps nécessaire pour élever la température dudit four 100, et adapter ce laps de temps au fil du temps, compensant notamment le vieillissement desdits moyens thermiques. Dès lors, on peut calculer avec exactitude et en temps réel la vitesse de montée en température des moyens thermiques.

A ce titre, on notera que la mesure des valeurs de la durée d'élévation peut s'opérer à chaque lancement de production, lorsque les moyens thermiques sont mis en fonctionnement, jusqu'à atteindre la température de consigne 1000. Ladite durée d'élévation peut aussi être enregistrée lors d'une élévation précédente, suite à un arrêt échu. On s'assure ainsi que les données passées enregistrées comportent au moins une durée de référence, à savoir un ou plusieurs intervalles de temps pour que le four 100 passe d'une température inférieure vers une température supérieure.

En outre, pour des moyens thermiques comprenant plusieurs éléments, par exemple deux zones de chauffe du four 100, l'invention enregistre les durées d'élévation des températures propres à chaque zone de chauffe et on peut calculer une moyenne de ces durées d'élévation des températures pour l'ensemble des zones de chauffe.

Plus particulièrement, de façon automatique, la baisse de température peut s'effectuer par arrêt des moyens thermiques et décroissement de la température jusqu'à atteindre au bout d'un moment une valeur basse, cette dernière devenant ledit seuil minimum 1001, à partir duquel sera déclenché la hausse de température jusqu'à la température de consigne 1000, du fait qu'il reste un temps limité connu ou estimé sur la période.

Ainsi, en connaissant à l'avance la hausse de la température des moyens thermiques et la durée pour effectuer cette élévation, l'invention permet d'anticiper avec précision une baisse puis une hausse de ladite température, selon des valeurs déterminées à l'avance ou ajustées en temps réel, en coïncidant tout au long de la période de l'arrêt.

Comme évoqué précédemment, lesdites données sont au moins des données passées, comprenant au moins la durée d'élévation de la température desdits moyens thermiques depuis une première température jusqu'à une deuxième température.

Dès lors, les événements passés et les arrêts peuvent être de différents types, comme un arrêt envisagé de la production sur une période préétablie, un impondérable bloquant ou ralentissant la continuité de la production au niveau d'un module, une défaillance d'un module ou encore des opérations de maintenance.

Comme évoqué précédemment, lesdites données de chaque événement passé sont déterminées comme « passées ». Les données passées font donc référence à des valeurs enregistrées au préalable.

Une donnée passée peut être une durée antérieure durant laquelle on a modifié puis on a rétabli la température desdits moyens thermiques. En effet, l'invention peut choisir la durée d'un événement passé identique ou similaire et l'appliquer à l'arrêt qui survient. Dès lors, la plus courte durée enregistrée devra être prise en compte, afin de s'assurer du bon retour à la température de consigne.

On notera que les événements passés peuvent être catégorisés, par rapport au module où ils surviennent, leurs causes probables ou encore toute caractéristique les définissant. Dès lors, on enregistre des valeurs, incluant des durées, pour chaque événement en vue de le catégoriser, permettant de le comparer avec l'arrêt et la catégorisation qui en est éventuellement faite, pour retirer les données enregistrées et les appliquer à la gestion actuelle. En l'absence de catégorie définie de l'arrêt, il est alors possible de combiner plusieurs catégories d'événements passés, pour retirer la valeur de durée la plus pertinente parmi celles des données passées. La durée la plus pertinente est souvent la plus courte, à appliquer dans le cas dudit présent arrêt, afin de s'assurer que la température de consigne 1000 est atteinte, même si l'arrêt devait se prolonger au-delà. Cette durée la plus pertinente peut donc être inférieure à la période de l'arrêt.

A titre d'exemple non limitatif, pour un même module, plusieurs catégories conservent des informations visant la cause de l'arrêt, comme l'organe, la zone ou le poste en cause, ainsi que les valeurs des durées relatives au temps nécessaire à la réparation ou à l'entretien, pour chaque organe, zone ou poste en question. Les catégories peuvent donc être multipliées pour chaque module et chacun de ses éléments le constituant.

Selon un autre exemple, des catégories peuvent être déterminées, enregistrant des données passées, visant chaque portion des moyens de convoyage 4 et les causes d'arrêt pouvant y survenir. Dès lors, dans ce cas, on peut interpréter de façon élargie les moyens de convoyage 4 comme étant un module amont/aval 3.

Une autre donnée passée peut être une durée de résolution durant laquelle on a résolu un problème spécifique survenu au niveau dudit module principal 1, dudit module amont et/ou aval 3. Dans ce cas, ledit problème est connu et identifié, des données passées ayant déjà été enregistrées visant un événement passé identique. On applique donc cette durée de résolution pour envisager la période de l'arrêt. Cette durée de résolution nécessite donc l'enregistrement d'informations complémentaires visant le type d'arrêt qui survient et les types d'événements survenus antérieurement.

Une autre donnée passée peut être une durée de reprise de la production entre ledit module principal 1, un module amont et/ou aval 3. En effet, l'invention prend en considération le temps que mettent les produits 2, une fois que leur circulation est rétablie, pour parvenir au module principal 1 ou au module aval 3. Chaque durée de reprise peut donc être répertoriée en fonction du chemin à parcourir entre différents modules. Ce laps de temps de circulation des produits 2, même minime, peut permettre une baisse non conséquente de la température, mais qui est clairement significative au fil du temps.

Selon un autre mode de réalisation, alternatif ou complémentaire, lesdites données peuvent comprendre des données connues concernant une consigne. Ces données connues ne concernent pas un événement passé. En somme, il s'agit de données prédéfinies.

Une donnée connue peut être une durée planifiée d'arrêt de la circulation des produits 2 le long de ladite ligne de production. En d'autres termes, l'invention permet d'adapter la température des moyens thermiques en fonction d'arrêts prévus, avec au moins un horaire déterminé de reprise de la production, de préférence un horaire connu d'arrêt et un autre de reprise, déterminant précisément ladite période de l'arrêt. La gestion selon l'invention permet, de remonter la température au moment propice, après une baisse et éventuellement un maintien au seuil minimum 1001, assurant toujours qu'au moment de cette reprise, la température des moyens thermiques a atteint la température de consigne 1000.

Une autre donnée connue peut être une durée estimée et saisie par un opérateur. L'estimation peut être prévue automatique ou bien manuelle, dans le cas d'un événement similaire survenu dans le passé, concernant un module identique ou une cause semblable survenue le long de la ligne de production. L'invention applique alors cette durée estimée qui pourra être prise en considération pour la baisse puis la hausse de température maîtrisées.

Cette durée estimée peut comprendre une durée saisie par un opérateur. Dans ce cas, généralement après un diagnostic, un opérateur peut déterminer la valeur de la durée à prendre en considération. En d'autres termes, un opérateur a déjà l'expérience d'une durée minimum d'arrêt estimée, par exemple pour une panne différente mais s'approchant d'une panne qui a déjà eu lieu, le retour à la normale ayant toujours duré un minimum de temps connu de l'opérateur. La durée estimée inconnue devient alors connue au moment où elle est apportée par ledit opérateur. Ce dernier peut alors renseigner ce temps minimum. Pour ce faire, l'invention prévoit au moins une interface dédiée à cet effet, permettant de renseigner manuellement ladite valeur de la durée saisie, ainsi que d'autres informations connexes, en rapport par exemple avec les causes et le module concerné.

On notera que les durées planifiées, antérieures, déterminées, estimées et saisies peuvent être combinées ou non, en vue de déterminer jusqu'à quel seuil minimum 1001 descendre en température et/ou jusqu'à quel moment avant de commander la hausse.

Une fois ces données passées et/ou connues de durées enregistrées, l'invention peut aussi mettre en place un système de compte à rebours, avant déclenchement de la hausse en température, étant donné qu'est connue la durée nécessaire pour remonter la température jusqu'à la consigne 1000.

D'autres informations peuvent être précisées, de façon automatique ou manuelle, en rapport avec chaque durée et chaque type de données passées et/ou connues, afin de les classifier. De façon manuelle, un opérateur peut se charger de saisir toute ou partie desdites informations. De façon automatique, l'invention peut prévoir des moyens adaptés afin de détecter et enregistrer toute ou partie desdites informations, notamment par l'intermédiaire de moyens de détection 8, tels des capteurs, positionnés à certains endroits de la ligne de production et/ou équipant les modules.

Des moyens complémentaires informatiques peuvent assurer l'enregistrement et la gestion des données passées et/ou connues par l'invention. De tels moyens peuvent être prévus déportés, centralisant la saisie par un opérateur, notamment par l'intermédiaire d'une interface homme-machine, comme par exemple un terminal informatique, prévu fixe ou mobile.

Dès lors, on peut rétablir la température des moyens thermiques en fonction des données au moins passées, si possible combinées avec des données connues.

En outre, on peut enregistrer plusieurs valeurs de données passées pour chaque catégorie et on conserve les valeurs de données passées enregistrées les plus récentes. En d'autres termes, un nombre d'enregistrements pour chaque type de durée est défini de façon maximale, notamment arbitrairement. Lors de l'enregistrement d'une nouvelle valeur d'une durée, l'ancienne valeur est supprimée et la nouvelle valeur est enregistrée. La seconde valeur la plus ancienne vient remplacer la plus ancienne, et ainsi de suite.

A titre d'exemple, lorsque le module principal 1 est consiste en une fardeleuse, une catégorie peut être la durée de reprise entre la souffleuse et la fardeleuse lors d'un arrêt provoqué par une interruption de ladite souffleuse. Une autre catégorie peut être la durée de reprise entre un palettiseur et la fardeleuse lors d'un arrêt provoqué par une interruption dudit palettiseur. Encore une autre catégorie peut être la durée nécessaire au changement d'un moule défectueux de la souffleuse, etc.

De surcroît, on peut conserver les valeurs des données les plus récentes, comme par exemple les données à jour visant la montée en température propre au four 100. Ainsi, on est certain que le four 100 s'adapte continuellement au plus près de la réalité de son fonctionnement actuel, prenant en compte son vieillissement.

Au moment de l'utilisation des données passées, l'invention prévoit que les valeurs des données passées peuvent être comparées. Le choix de la comparaison est assuré de façon défavorable, de sorte qu'en tous les cas, au moment de la reprise de continuité de la production, la température de consigne est atteinte. En somme, en prenant en considération la valeur de donnée la plus défavorable, on s'assure que le four 100 sera prêt plus tôt plutôt que plus tard, ne nuisant aucunement à la bonne reprise de la production tout le long de la ligne.

Le plus souvent, pour un arrêt, c'est la valeur représentant la plus courte durée parmi toutes les valeurs des données passées enregistrées pour une même catégorie, qui est prise en compte.

A l'inverse, par exemple, en considérant une durée nécessaire pour allumer les moyens thermiques jusqu'à ce qu'ils atteignent la température de consigne 1000, si la nouvelle durée enregistrée est plus longue que la durée préalablement enregistrée dans les données, ladite nouvelle durée plus longue est défavorable et sera prise en considération.

En outre, l'invention peut ainsi ne pas prendre en compte une donnée erronée, dont la valeur serait décalée et sortirait d'un intervalle logique. Cette valeur décalée serait vite comparée et non prise en compte, remplacée par une valeur correspondant davantage à la réalité et entrant au sein dudit intervalle du fonctionnement habituel et normal.

A titre d'exemple, pour chaque durée, un nombre d'enregistrements peut être déterminé de façon arbitraire, notamment de un à dix.

De plus, un nombre défini d'enregistrements peut être dédié à des plages de températures, selon un différentiel de températures, par exemple de dix degrés Celsius, ou bien de plus et/ou moins cinq degrés autour d'une valeur déterminée. Dès lors, ce différentiel ou « delta » peut aussi être utilisé pour mesurer à intervalles temporels réguliers la température, permettant d'obtenir des courbes modélisant la variation de la température par paliers en fonction du temps. Inversement, en mesurant précisément deux première et deuxième températures, il est possible de déterminer un intervalle temporel entre les deux.

L'invention peut aussi prévoir d'appliquer des bonus ou malus autour des valeurs des données passées enregistrées, par exemple sur un ratio de cinq à dix pourcents, de manière à encore une fois s'assurer que les moyens thermiques sont prêts, à la température de consigne 1000, lors de la reprise de la continuité de la production, au terme de la période de l'arrêt survenu.

A ce titre, un arrêt terminé, une fois la production reprise, devient un événement passé dont les données ont été enregistrées.

Dès lors, on constate que l'invention différencie les problèmes survenant au niveau du module principal 1 et les problèmes survenant aux niveaux des autres modules amont et/ou aval 3. En effet, une interruption au niveau d'un module amont et/ou aval 3 entraîne notamment une durée de cheminement des produits jusqu'au module principal 1.

En reprenant l'exemple d'un module principal 1 de type fardeleuse, si on sait que ladite fardeleuse ne peut pas produire pendant trois minutes, et que la remontée en température enregistrée est de vingt degrés Celsius par minute, alors on commande la baisse en température du four jusqu'à atteindre une température inférieure, définissant ledit seuil minimum 1001, à partir duquel, une fois atteint, par mesure ou bien par l'intermédiaire d'un compte à rebours, on commande la hausse de température en fonction du temps restant correspondant à la durée d'élévation nécessaire entre ledit seuil minimum 1001 et ladite température de consigne 1000. Ainsi, si le four 100 perd dix degrés Celsius par minute, il va descendre en température pendant deux minutes pour perdre vingt degrés Celsius, puis remonter en température pendant une minute pour atteindre à nouveau sa température de consigne 1000, soit au total trois minutes après le déclenchement de cette opération de gestion.

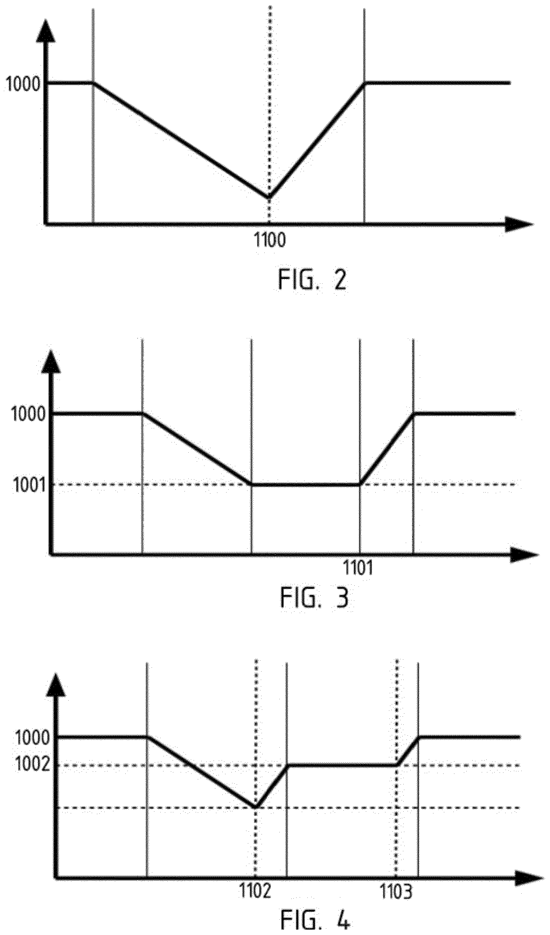

De façon générique, la figure 2 représente une descente en température depuis la température de consigne 1000 jusqu'à atteindre une température basse, à un instant 1100, qui détermine le point de départ de la remontée en température, en fonction du laps de temps restant sur la période de l'arrêt, mais aussi en fonction de la durée d'élévation cette température basse atteinte jusqu'à ladite température de consigne 1000.

Dans ce cas, la période de l'arrêt est connue de façon minimale. Même si l'arrêt se prolonge, on est certain d'être de nouveau arrivé à la température de consigne 1000 au moment de ou avant la fin de ladite période. Sur la figure 2, la période d'arrêt minimale connue peut correspondre à la durée qui s'écoule entre le moment où la température du four commence à diminuer jusqu'à ce que la température de consigne 1000 soit à nouveau atteinte.

Typiquement cette figure peut illustrer le cas où l'invention utilise la combinaison d'une donnée passée, à savoir au moins une durée d'élévation de la température du four, correspondant à la pente croissante, combinée à une donnée connue, à savoir une durée planifiée d'arrêt ou une durée estimée d'arrêt, correspondant aux deux pentes décroissantes et croissantes.

En somme, on dispose d'une période connue et on diminue la température du four 100 jusqu'à ce que la valeur de la température mesurée croise la courbe ascendante de la montée en température, déterminant ledit instant 1100. On est alors certain, qu'à ce moment du croisement, il reste le temps nécessaire pour remonter jusqu'à la température de consigne 1000 et la remontée en température dudit four 100 est immédiatement commandée.

De façon générique, la figure 3 montre une descente depuis la température de consigne 1000 jusqu'au seuil minimum 1001. La durée de maintien audit seuil 1001 dépend alors de la valeur de sa température et de la durée nécessaire pour remonter, toujours en fonction des données passées, à savoir au moins la durée de montée en température du four 100, combinée ou non à d'autres données passées et/ou connues. Cette durée s'arrête donc à un instant 1101 à partir duquel on commande l'élévation en température.

Dans ce cas, il peut s'agir d'une descente très faible en température, permettant de revenir très rapidement à la température de consigne 1000. Typiquement, la figure 3 peut illustrer le cas où l'invention utilise la combinaison de deux données passées, à savoir au moins une durée d'élévation de la température du four 100, avec au moins une durée de reprise de la production entre le module principal 1 et un module amont ou aval 3. Dans ce cas, l'arrêt du module principal 1 a par exemple été provoqué par l'interruption d'un module amont 3. La température 1001 est alors déterminée de sorte que, lorsque la production reprend au niveau du module 3, à l'instant 1101, le four 100 dispose du temps nécessaire pour atteindre la température de consigne 1000 au moment où le module principal 1 peut reprendre la production.

De façon générique, la figure 4 montre une descente depuis la température de consigne 1000 jusqu'à un instant 1102, par exemple quand une température minimale est atteinte. A cet instant 1102, on rehausse alors la température jusqu'à atteindre ledit palier 1002, qui est maintenu jusqu'à un autre instant ultérieur 1103, déterminant la fin dudit palier 1002 et entamant la poursuite de l'élévation de température.

Dès lors, ladite durée d'élévation peut être coupée en deux, pour correspondre à chaque hausse successive, avant et après ledit palier 1002.

Ce cas est particulièrement adapté quand la durée minimale d'arrêt d'un module amont ou aval 3 est connue, par exemple lorsqu'il s'agit d'un arrêt identique à un événement passé.

Cette figure 9 peut par exemple illustrer le cas où un module amont 3 s'interrompt, provoquant alors l'arrêt du module principal 1. La durée minimale d'arrêt du module 3 est estimée, par exemple par un opérateur, qui saisit cette durée, mais la durée effective d'arrêt du module 3 s'avère en réalité plus longue que la durée minimale estimée.

Dès lors, l'invention combine alors les données suivantes pour optimiser la consommation énergétique du four 100 :
- a) une donnée passée correspondant à au moins une durée d'élévation de la température du four ;
- b) une donnée connue correspondant à la durée estimée d'arrêt du module 3; et
- c) une donnée passée correspondant à au moins une durée de reprise de la production entre le module 3 et le module principal 1.

Sur cette figure 4, la durée d'arrêt estimée du module 3 prend fin lorsque le four 100 atteint le palier 1002. Grâce à l'invention, la valeur de température 1002 est déterminée en fonction des données a) et c) susmentionnées, pour que le four 100 dispose du temps nécessaire pour atteindre la température de consigne 1000 au moment où le module principal 1 peut reprendre la production à partir de la température 1002, en considérant que l'on rehausse la température du four 100 lorsque le module 3 reprend effectivement la production, à savoir à partir de l'instant 1103.

L'invention détermine également l'instant 1102 lors duquel on rehausse la température du four 100 pour qu'il atteigne la température 1002 à la fin de la durée minimale estimée du module 3. Cet instant est déterminé à l'aide des données a) et b) ci-dessus.

De façon subsidiaire, lesdits moyens thermiques du module principal 1 peuvent comporter des moyens connexes, comme des moyens de refroidissement 101 ou des moyens de régulation 102 du convoyeur 103. L'invention prévoit alors de modifier le fonctionnement desdits moyens connexes en fonction des données, à savoir de ladite durée prise en considération. En effet, étant donné que la température des moyens thermiques est abaissée, il est alors possible de modifier le comportement des autres organes du module principal 1, sur la durée déterminée ou choisie. Le retour au fonctionnement normal des moyens connexes peut être opéré avant ou simultanément à la hausse de température. A titre d'exemple, la vitesse du convoyeur 103 peut être ralentie ou stoppée, de même que les moyens de régulation 102 assurant son refroidissement qui peuvent être remontés à une température plus élevée, étant donné que les moyens thermiques chauffent moins. Selon un autre exemple, les moyens de refroidissement 101 des produits 2, ne recevant plus de produits 2 à refroidir, peuvent être ralentis ou stoppés de la même façon. Ce même principe de gestion peut être appliqué aux autres modules amont et/ou aval 3 de la ligne de production.

Si le module principal 1 est équipé de moyens connexes d'obturation de son entrée et/ou de sa sortie, alors l'invention peut commander la fermeture, pour limiter les déperditions de chaleur depuis les moyens thermiques vers l'extérieur, puis au terme de la durée, rouvrir la porte d'entrée juste avant l'arrivée des produits 2 à l'entrée, et réciproquement pour la sortie, tout en prenant en compte les délais connus d'ouverture et de fermeture desdites portes.

En d'autres termes, à partir du moment où on contrôle de façon prédéterminée la baisse et la hausse de température du module principal 1, il est possible de mettre en place un mode veille sur différents organes dudit module principal 1, ainsi qu'éventuellement des organes de l'un et/ou l'autre des modules amont et/ou aval 3.

L'invention concerne donc un procédé reprenant l'une et/ou l'autre des étapes susmentionnées.

L'invention concerne aussi un dispositif de gestion d'au moins un module principal 1 au sein d'une ligne de production.

Comme évoqué précédemment, ledit module principal 1 comprend des moyens thermiques et des moyens de contrôle 5 d'au moins la température desdits moyens thermiques. Ces moyens de contrôle 5 peuvent être des thermostats. Les moyens thermiques peuvent être constitués par au moins un four 100. Un tel four 100 peut comprendre plusieurs zones de chauffe.

Selon l'invention, ledit dispositif comprend des moyens de gestion 6 pourvus de moyens d'enregistrement de données, dont au moins une durée d'élévation de la température desdits moyens thermiques depuis une première température jusqu'à une deuxième température.

Lesdits moyens de gestion 6 sont aussi pourvus de moyens de commande 7 automatique desdits moyens de contrôle 6 appliquant au moins une hausse de ladite température des moyens thermiques en fonction desdites données passées. Lesdits moyens de commande 7 permettent donc d'interagir sur la température du four 100.

En outre, lesdits moyens d'enregistrement peuvent comprendre des moyens de sélection des valeurs pour chacune desdites données passées. Ces moyens de sélection permettent de trier les données, les consulter, les comparer, les modifier, etc.

Ledit dispositif peut comporter des moyens de détection 8 d'un arrêt survenant au niveau dudit module principal 1 et/ou dudit module amont et/ou aval 3. Ces moyens de détection 8 peuvent être un ou plusieurs capteurs de mesure, comme des capteurs thermiques permettant de mesurer la température desdits moyens thermiques, à savoir du four 100.

Ces capteurs permettent aussi de détecter d'autres informations au niveau du module principal 1 et/ou des autres modules amont et/ou aval 3. Lesdits capteurs peuvent être disposés à des emplacements précis le long de la ligne de production, comme par exemple au niveau des entrée et sortie de chaque module amont et/ou aval 3 et/ou du module principal 1, ainsi qu'à l'intérieur. Ces capteurs peuvent notamment permettre de détecter un dysfonctionnement du module en question, un mauvais positionnement des produits 2, comme une chute, etc. Pour ce faire, les capteurs présentent le type de détection adapté en fonction de leur emplacement et de leur rôle. Lesdits capteurs sont alors reliés aux moyens de gestion 6, en vue de transmettre des signaux relatifs à la détection.

On notera que les moyens de gestion 6 peuvent être reliés à des capteurs déjà en place au niveau des modules, en vue de récupérer des informations de détection et de fonctionnement déjà supervisées par les moyens de contrôle propres à chaque module.

Les moyens de détection 8 permettent donc de déterminer au plus tôt de façon automatique lorsqu'un arrêt survient au niveau dudit module principal 1 et/ou dudit module amont et/ou aval 3, en vue de transmettre ces données aux moyens de gestion 8.

Ainsi, au travers de la gestion de la température de fonctionnement des moyens thermiques du module principal 1, d'éventuellement ses moyens connexes et/ou des autres modules amont et/ou aval 3, l'invention permet d'anticiper à partir de données préalablement enregistrées (telles que enregistrées en cours de production) et connues, une baisse puis surtout une hausse contrôlée de ladite température, selon des valeurs calculées en fonction des durées prises en considération, diminuant les dépenses énergétiques pendant ces moments.

L'invention prévoit la hausse en fonction des données notamment passées et éventuellement également en fonction des données connues et, ainsi, induit de façon déterminée ou non, quelle baisse on peut envisager à partir de ladite hausse prévue.

De surcroît, au travers de la mise à jour des données passées mesurées, comparées et enregistrées, l'invention présente un aspect d'apprentissage automatique, améliorant ses performances au fil du temps et de la survenue des arrêts.

L'invention trouvera une application maximisée dans la gestion de module principal 1 dont les moyens thermiques présentent une inertie de chauffe et/ou de refroidissement.

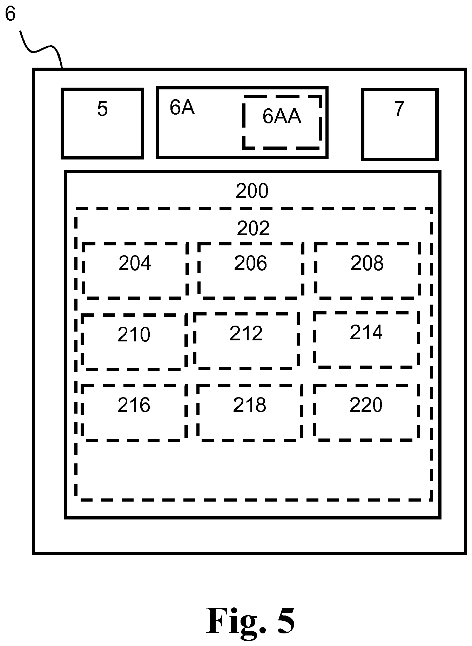

En référence à l'exemple non limitatif représenté sur la figure 5, des moyens de gestion 6 d'un dispositif de gestion d'au moins un module principal au sein d'une ligne de production sont représentés schématiquement. Ledit module principal comprend des moyens thermiques et des moyens de contrôle d'au moins la température desdits moyens thermiques. Les moyens de gestion 6 sont pourvus de moyens d'enregistrement 6A de données dont au moins des données passées 202, lesdites données passées 202 concernant au moins un événement passé et comprenant au moins une durée 204 d'élévation de la température desdits moyens thermiques depuis une première température jusqu'à une deuxième température.

Les moyens de gestion 6 sont pourvus de moyens de commandes automatiques 7 desdits moyens de contrôle 5 appliquant au moins une hausse de ladite température des moyens thermiques en fonction desdites données 200.

Les moyens de gestion 6 peuvent être pourvus d'un processeur apte à effectuer le procédé présenté.

Les moyens de gestion 6 peuvent être pourvus de moyens de stockage des données 200. Les moyens de stockage des données 200 (tels qu'une mémoire) sont aptes à stocker lesdites données passées 202 concernant au moins un événement passé et comprenant au moins une durée 204 d'élévation de la température desdits moyens thermiques depuis une première température jusqu'à une deuxième température. Les moyens de stockage des données 200 (tels qu'une mémoire) sont aptes à stocker lesdites données passées 202 de manière à disposer d'un historique reflétant les propriétés intrinsèques du module principal ou en amont ou en aval.

Lesdites données passées 200 peuvent comprendre des données 206 représentatives d'un événement passé. Les données 206 représentatives de l'événement peuvent avoir une structure de données qui comprend un type d'événement indicatif de l'événement, et/ou un ou plusieurs paramètres indicatifs de l'événement. Lesdites données 202 peuvent avoir une structure de données qui comprend un indicateur 208 de catégorie de données, et/ou un indicateur 210 de type de données. Lesdites données 202 peuvent être indexées en fonction de leur catégorie indiquée par un indicateur 208 de catégorie de données et/ou de l' indicateur 210 de type de données. Lesdites données 202 peuvent avoir une structure de données qui comprend un identifiant 212 du module concerné. Lesdites données 202 peuvent être indexées selon l'identifiant 212 du module concerné. Lesdites données 202 peuvent avoir une structure de données qui comprend un horodatage 214 des données au moment de l'enregistrement des données. Lesdites données peuvent être indexées en fonction de leur horodatage 214.

Lesdites données passées 202 peuvent comprendre une durée antérieure 216 durant laquelle on a abaissé puis on a rétabli la température desdits moyens thermiques ; une durée de résolution 218 durant laquelle on a résolu un problème spécifique survenu au niveau dudit module principal, dudit module amont et/ou aval; et/ou une durée de reprise de la production entre ledit module principal, un module amont et/ou aval.

Lesdits moyens 6A d'enregistrement peuvent comprendre des moyens 6AA de sélection des valeurs pour chacune desdites données passées. Les moyens 6AA de sélection sont aptes à sélectionner des valeurs pour chacune desdites données passées. Alternativement ou additionnellement, les moyens 6AA de sélection sont aptes à sélectionner, trier, organiser et accéder aux données passées 202 en fonction du type d'événement rencontré, de l'indicateur 208 de catégorie de données, de l'indicateur 210 de type de données, et/ou de l'horodatage.

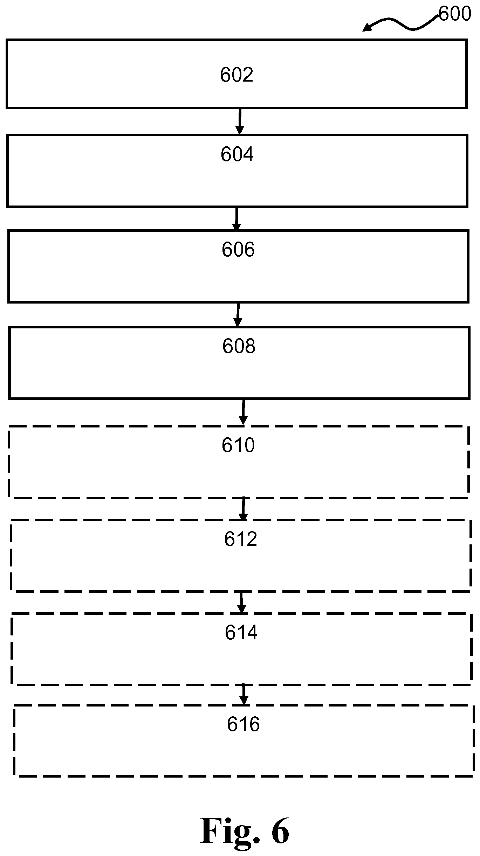

En référence à l'exemple non limitatif représenté sur la figure 6, le déroulement d'un procédé 600 (ou une méthode) de gestion d'un module principal d'une ligne de production est représenté schématiquement, ladite ligne comportant au moins un module situé en amont ou en aval dudit module principal, ledit module principal étant équipé de moyens thermiques fonctionnant en production à une température de consigne. Le procédé 600 comprend que : en cours de production, lorsque survient un arrêt de la continuité de production au niveau dudit module principal sur une période, on abaisse 602 la température desdits moyens thermiques. Le procédé 600 comprend qu'on rétablit 604 la température desdits moyens thermiques jusqu'à atteindre ladite température de consigne (1000). Le procédé 600 comprend que l'on enregistre 606 des données comprenant au moins des données passées, lesdites données passées concernant au moins un événement passé et comprenant au moins une durée d'élévation de la température desdits moyens thermiques depuis une première température jusqu'à une deuxième température. Le procédé 600 comprend que l'on adapte 608 automatiquement, en fonction desdites données, la température desdits moyens thermiques jusqu'à atteindre ladite température de consigne, au plus tard quand la continuité de production reprend au niveau dudit module principal.

L'enregistrement 606 des données, notamment des données passées concernant au moins un événement passé, de préférence plusieurs événements passés permet que lorsque survient un événement, tel qu'un arrêt, nouveau, similaire ou identique, sur la ligne de production, au niveau de l'un et/ou l'autre desdits modules, on récupère les données passées préalablement enregistrées concernant un événement passé similaire ou identique, qui peuvent être ainsi appliqués en étape 608. Si l' événement est nouveau, on peut comparer les données passées avec des données mesurées concernant l'événement en cours, et éventuellement enregistrer les données mesurées, relatives à l'événement qui survient et altère la production. L'enregistrement 606 des données peut inclure une ou plusieurs mesures de la température desdits moyens thermiques. Ces mesures peuvent être opérées en continu ou à intervalles réguliers ou irréguliers. Ainsi, outre connaître la température des moyens thermiques, le procédé 600 inclut que l'on détermine un laps de temps nécessaire pour élever la température dudit four, et adapter ce laps de temps, progressivement et continuellement. Ainsi, notamment le vieillissement desdits moyens thermiques peut être compensé et on peut calculer avec une précision améliorée et en temps réel la vitesse de montée en température des moyens thermiques. L'enregistrement 606 de ladite durée peut s'effectuer par intervalles réguliers ou irréguliers de températures, les bornes inférieures et supérieures de tels intervalles étant respectivement la première et la deuxième température. De tels intervalles représentent donc un délai entre un delta de deux températures, ladite première et ladite deuxième température.

Le procédé 600 peut comprendre que l'on détermine, en fonction de ladite durée d'élévation, une courbe croissante, lissée ou non, sous forme de segments de droites correspondant auxdits intervalles, modélisant la température des moyens thermiques en fonction du temps. En particulier, le procédé 600 peut inclure de déterminer les coefficients directeurs de chacun des segments de droites, d'effectuer des extrapolations linéaires entre deux instants ou deux valeurs de températures, ou encore de calculer des courbes moyennes entre deux points. Ainsi, à partir de n'importe quelle valeur de température des moyens thermiques, le procédé 600 permet de connaître le temps nécessaire pour atteindre la valeur de la température de consigne.

Le procédé 600 peut comprendre que l'on enregistre 610, en sus au sein desdites données, des données connues, lesdites données connues étant relatives à une consigne et comprenant :
une durée planifiée d'arrêt de la circulation des produits le long de ladite ligne de production ; et/ou une durée estimée et saisie par un opérateur.

Le procédé 600 peut comprendre que l'on enregistre 612 plusieurs valeurs d'une même catégorie de données passées et qu'on applique la valeur la plus défavorable pour adapter automatiquement la température desdits moyens thermiques.

Le procédé 600 peut comprendre que l'on remplace 614 la valeur la plus ancienne d'une même catégorie de données passées par une valeur nouvellement enregistrée.

Le procédé 600 peut comprendre que l'on enregistre en continue les données en cours de production et en temps réel, et que l'on enregistre ces données en tant que ou avec les données passées.

Le procédé 600 peut être caractérisé en ce que lesdits moyens thermiques du module principal comportent des moyens connexes, et en ce qu'on modifie 616 le fonctionnement desdits moyens connexes en fonction desdites données sur ladite période dudit arrêt.

Le procédé 600 peut inclure que l'on anticipe, basé sur l'obtention (grâce aux données passées) à l'avance de la hausse de la température des moyens thermiques et de la durée pour effectuer cette élévation, une baisse puis une hausse de ladite température, selon des valeurs déterminées à l'avance ou ajustées en temps réel, en coïncidant tout au long de la période de l'arrêt.

Le procédé 600 peut inclure que l'on différencie des problèmes survenant au niveau du module principal et des problèmes survenant aux niveaux des autres modules amont et/ou aval. En effet, une interruption au niveau d'un module amont et/ou aval entraîne notamment une durée de cheminement des produits jusqu'au module principal qui peut être estimé par les moyens de gestion.

Le procédé 600 peut inclure que l'on détermine le point de départ de la remontée en température, en fonction du laps de temps restant sur la période de l'arrêt, mais aussi en fonction de la durée d'élévation cette température basse atteinte jusqu'à ladite température de consigne.

## Revendications

1. Procédé de gestion d'un module principal (1) d'une ligne de production, ladite ligne comportant au moins un module situé en amont ou en aval (3) dudit module principal (1), ledit module principal (1) étant équipé de moyens thermiques fonctionnant en production à une température de consigne (1000), procédé dans lequel :
- en cours de production, lorsque survient un arrêt, ledit arrêt étant un arrêt imprévu, de la continuité de production au niveau dudit module principal (1) sur une période, on abaisse la température desdits moyens thermiques ;
- puis on rétablit la température desdits moyens thermiques jusqu'à atteindre ladite température de consigne (1000) ;
- on enregistre des données comprenant au moins des données passées, lesdites données passées concernant au moins un événement passé survenu en production et comprenant au moins une durée d'élévation de la température desdits moyens thermiques depuis une première température jusqu'à une deuxième température ; **caractérisé en ce que**:
- on adapte automatiquement, en fonction desdites données passées enregistrées, la température desdits moyens thermiques jusqu'à atteindre ladite température de consigne (1000) au terme d'une durée d'arrêt extrapolée par rapport aux données passées enregistrées concernant un évènement passé similaire survenu en cours de production.

2. Procédé de gestion selon la revendication 1, **caractérisé en ce que** lesdites données passées comprennent :
- une durée antérieure durant laquelle on a abaissé puis on a rétabli la température desdits moyens thermiques ;
- une durée de résolution durant laquelle on a résolu un problème spécifique survenu au niveau dudit module principal (1), dudit module amont et/ou aval (3) ;
et/ou
- une durée de reprise de la production entre ledit module principal (1), un module amont et/ou aval (3).

3. Procédé de gestion selon l'une quelconque des revendications précédentes, **caractérisé en ce qu'**on enregistre en sus au sein desdites données, des données connues, lesdites données connues étant relatives à une consigne et comprenant :
- une durée planifiée d'arrêt de la circulation des produits le long de ladite ligne de production ;
et/ou
- une durée estimée et saisie par un opérateur.

4. Procédé de gestion selon l'une quelconque des revendications précédentes, **caractérisé en ce qu'**on enregistre plusieurs valeurs d'une même catégorie de données passées et qu'on applique la valeur la plus défavorable pour adapter automatiquement la température desdits moyens thermiques.

5. Procédé de gestion selon la revendication 4, **caractérisé en ce qu'**on remplace la valeur la plus ancienne d'une même catégorie de données passées par une valeur nouvellement enregistrée.

6. Procédé de gestion selon l'une quelconque des revendications précédentes, **caractérisé en ce que** lesdits moyens thermiques du module principal (1) comportent des moyens connexes, et **en ce qu'**on modifie le fonctionnement desdits moyens connexes en fonction desdites données sur ladite période dudit arrêt.

7. Dispositif de gestion d'au moins un module principal au sein d'une ligne de production, ledit module principal (1) comprenant des moyens thermiques et des moyens de contrôle (5) d'au moins la température desdits moyens thermiques, **caractérisé en ce que** ledit dispositif comprend des moyens de gestion (6) pourvus :
- de moyens d'enregistrement de données dont au moins des données passées, lesdites données passées concernant au moins un événement passé survenu en production et comprenant au moins une durée d'élévation de la température desdits moyens thermiques depuis une première température jusqu'à une deuxième température ;
- de moyens de commande automatique desdits moyens de contrôle (5) appliquant au moins une hausse de ladite température des moyens thermiques en fonction desdites données, lesdits moyens de gestion (6) étant pourvus d'un processeur configuré pour à effectuer le procédé selon l'une des revendications 1 à 6.

8. Dispositif de gestion selon la revendication 7, **caractérisé en ce que** lesdits moyens d'enregistrement comprennent des moyens de sélection des valeurs pour chacune desdites données passées.

9. Dispositif de gestion selon l'un quelconque des revendications 7 à 8, **caractérisé en ce qu'**il comporte des moyens de détection (8) d'un arrêt survenant au niveau dudit module principal (1) et/ou d'une interruption au niveau dudit module amont et/ou aval (3).

## Patentansprüche

1. Verfahren zur Verwaltung eines Hauptmoduls (1) einer Produktionsstrecke, wobei die Strecke wenigstens ein Modul beinhaltet, das sich stromauf oder stromab (3) des Hauptmoduls (1) befindet, wobei das Hauptmodul (1) mit Wärmemitteln ausgerüstet ist, die in der Produktion mit einer Vorgabetemperatur (1000) arbeiten, wobei bei dem Verfahren:
- wenn bei der Produktion über eine Zeitspanne ein unvorhergesehener Stillstand der Produktionskontinuität am Hauptmodul (1) auftritt, die Temperatur der Wärmemittel abgesenkt wird;
- dann die Temperatur der Wärmemittel wiederhergestellt wird, bis die Vorgabetemperatur (1000) erreicht ist;
- Daten aufgezeichnet werden, die wenigstens vergangene Daten umfassen, wobei die vergangenen Daten wenigstens ein vergangenes Ereignis betreffen, das in der Produktion aufgetreten ist und wenigstens eine Dauer einer Erhöhung der Temperatur der Wärmemittel von einer ersten Temperatur auf eine zweite Temperatur umfassen; **dadurch gekennzeichnet, dass**:
- in Abhängigkeit von den aufgezeichneten vergangenen Daten die Temperatur der Wärmemittel automatisch angepasst wird, bis die Vorgabetemperatur (1000) am Ende einer Stillstandsdauer erreicht ist, die bezogen auf die aufgezeichneten vergangenen Daten extrapoliert ist, die ein ähnliches vergangenes Ereignis betreffen, das bei der Produktion aufgetreten ist.

2. Verwaltungsverfahren nach Anspruch 1, **dadurch gekennzeichnet, dass** die vergangenen Daten Folgendes umfassen:
- eine frühere Dauer, während welcher die Temperatur der Wärmemittel abgesenkt und dann wiederhergestellt wurde;
- eine Lösungsdauer, während welcher das spezifische Problem, das am Hauptmodul (1) des stromaufwärtigen und/oder stromabwärtigen Moduls (3) aufgetreten ist, gelöst wurde;
und/oder
- eine Dauer der Wiederaufnahme der Produktion zwischen dem Hauptmodul (1), einem stromaufwärtigen und/oder stromabwärtigen Modul (3).

3. Verwaltungsverfahren nach einem der vorhergehenden Ansprüche, **dadurch gekennzeichnet, dass** zusätzlich innerhalb der Daten bekannte Daten gespeichert werden, wobei die bekannten Daten mit einer Vorgabe in Bezug stehen und Folgendes umfassen:
- eine geplante Stillstandsdauer der Bewegung der Produkte entlang der Produktionsstrecke;
und/oder
- eine Dauer, die geschätzt und von einem Bediener erfasst wird.

4. Verwaltungsverfahren nach einem der vorhergehenden Ansprüche, **dadurch gekennzeichnet, dass** mehrere Werte einer selben Kategorie vergangener Daten gespeichert werden und dass der ungünstigste Wert angewandt wird, um die Temperatur der Wärmemittel automatisch anzupassen.

5. Verwaltungsverfahren nach Anspruch 4, **dadurch gekennzeichnet, dass** der älteste Wert einer selben Kategorie vergangener Daten durch einen neu gespeicherten Wert ersetzt wird.

6. Verwaltungsverfahren nach einem der vorhergehenden Ansprüche, **dadurch gekennzeichnet, dass** die Wärmemittel des Hauptmoduls (1) verbundene Mittel beinhalten, und dadurch, dass der Betrieb der verbundenen Mittel in Abhängigkeit von den Daten über die Zeitspanne des Stillstands geändert wird.

7. Vorrichtung zur Verwaltung wenigstens eines Hauptmoduls innerhalb einer Produktionsstrecke, wobei das Hauptmodul (1) Wärmemittel und Mittel zur Steuerung (5) wenigstens der Temperatur der Wärmemittel umfasst, **dadurch gekennzeichnet, dass** die Vorrichtung Verwaltungsmittel (6) umfasst, die mit Folgendem versehen sind:
- Mitteln zur Speicherung von Daten, darunter wenigstens vergangene Daten, wobei die vergangenen Daten wenigstens ein vergangenes Ereignis betreffen, das in der Produktion aufgetreten ist und wenigstens eine Dauer einer Erhöhung der Temperatur der Wärmemittel von einer ersten Temperatur auf eine zweite Temperatur umfassen;
- Mitteln zur automatischen Steuerung der Steuermittel (5), die wenigstens eine Erhöhung der Temperatur der Wärmemittel in Abhängigkeit von den Daten anwenden, wobei die Verwaltungsmittel (6) mit einem Prozessor versehen sind, der dazu ausgebildet ist, das Verfahren nach einem der Ansprüche 1 bis 6 durchzuführen.

8. Verwaltungsvorrichtung nach Anspruch 7, **dadurch gekennzeichnet, dass** die Speicherungsmittel Mittel zur Auswahl der Werte für jedes Element der vergangenen Daten umfassen.

9. Verwaltungsvorrichtung nach einem der Ansprüche 7 bis 8, **dadurch gekennzeichnet, dass** sie Mittel zur Detektion (8) eines Stillstands, der am Hauptmodul (1) auftritt, und/oder einer Unterbrechung am stromaufwärtigen und/oder stromabwärtigen (3) Modul beinhaltet.

## Claims

1. Method for managing a main module (1) of a production line, said line having at least one module situated upstream or downstream (3) of said main module (1), said main module (1) being equipped with thermal means operating in production at a setpoint temperature (1000), in which method:
- during production, when a stoppage occurs, said stoppage being an unexpected stoppage, in the production continuity at said main module (1) over a period, the temperature of said thermal means is lowered;
- then the temperature of said thermal means is re-established until said setpoint temperature (1000) is reached;
- data are recorded comprising at least past data, said past data relating to at least one past event that occurred in production and comprising at least one duration of elevation of the temperature of said thermal means from a first temperature to a second temperature; **characterized in that**:
- the temperature of said thermal means is adapted automatically, as a function of said recorded past data, until said setpoint temperature (1000) is reached at the end of a stoppage duration extrapolated with respect to the recorded past data relating to a similar past event that occurred during production.

2. Management method according to Claim 1, **characterized in that** said past data comprise:
- a prior duration during which the temperature of said thermal means was lowered and then re-established;
- a duration of resolution during which a specific problem that occurred at said main module (1), said upstream and/or downstream module (3), was resolved; and/or
- a duration of resumption of the production between said main module (1), an upstream and/or downstream module (3) .

3. Management method according to either one of the preceding claims, **characterized in that** known data are additionally recorded within said data, said known data being relative to a setpoint and comprising:
- a planned duration of stoppage of the circulation of the products along said production line;
and/or
- a duration estimated and input by an operator.

4. Management method according to any one of the preceding claims, **characterized in that** a plurality of values in one and the same past data category are recorded and the most unfavourable value is applied in order to automatically adapt the temperature of said thermal means.

5. Management method according to Claim 4, **characterized in that** the oldest value in one and the same past data category is replaced by a newly recorded value.

6. Management method to any one of the preceding claims, **characterized in that** said thermal means of the main module (1) have connected means, and **in that** the operation of said connected means is modified as a function of said data over said period of said stoppage.

7. Device for managing at least one main module within a production line, said main module (1) comprising thermal means and means (5) for controlling at least the temperature of said thermal means, **characterized in that** said device comprises management means (6) provided:
- with means for recording data including at least past data, said past data relating to at least one past event that occurred in production and comprising at least one duration of elevation of the temperature of said thermal means from a first temperature to a second temperature;
- means for automatic command of said control means (5) applying at least one increase in said temperature of the thermal means as a function of said data, said management means (6) being provided with a processor configured to carry out the method according to one of Claims 1 to 6.

8. Management device according to Claim 7, **characterized in that** said recording means comprise means for selecting values for each of said past data.

9. Management device according to either one of Claims 7 and 8, **characterized in that** it has means (8) for detecting a stoppage occurring at said main module (1) and/or an interruption at said upstream and/or downstream module (3).
